Europäisches Patentamt

(19) European Patent Office

Office européen des brevets

(11) Veröffentlichungsnummer: **0 039 467**
**A2**

(12) **EUROPÄISCHE PATENTANMELDUNG**

(21) Anmeldenummer: 81103185.5

(22) Anmeldetag: 28.04.81

(51) Int. Cl.³: **F 16 L 3/22**

(30) Priorität: 06.05.80 DE 3017317

(43) Veröffentlichungstag der Anmeldung: 11.11.81
Patentblatt 81/45

(84) Benannte Vertragsstaaten: **AT CH FR GB LI LU NL**

(71) Anmelder: Fa. Arthur Böhm Kunststoffverarbeitung, Kirchenlamitzerstrasse 8, D-8676 Schwarzenbach/Saale (DE)

(72) Erfinder: **Böhm, Arthur, Kirchenlamitzerstrasse 8, D-8676 Schwarzenbach (DE)**

(74) Vertreter: **Reinhard, Horst, Dr. et al, Patentanwälte Reinhard, Kreutz & Skuhra Leopoldstrasse 51, D-8000 München 40 (DE)**

(54) **Abstandshalter.**

(57) Ein Abstandshalter für Rohre besteht aus Halterungsteilen mit Öffnungen, in welche Rohre einschiebbar sind. Die Halterungsteile weisen auf ihrer den Öffnungen entgegenliegenden Seite bzw. Kante Arretierungseinrichtungen zur Befestigung in einem leistenförmigen Verbindungselement auf. Das Verbindungselement kann entweder symmetrisch, d. h. mit Aussparungen zur Aufnahme der Halterungsteile auf beiden Seiten oder unsymmetrisch mit nur einer Aussparung auf einer Seite ausgebildet sein.

0039467

Firma Arthur Böhm, Kunststoffverarbeitung,
Schwarzenbach/Saale

---

Abstandshalter

---

Die Erfindung betrifft einen Abstandshalter mit mehreren
Öffnungen zur Aufnahme von Rohren oder dergleichen und
zwischen den Öffnungen angeordneten Versteifungsrippen.

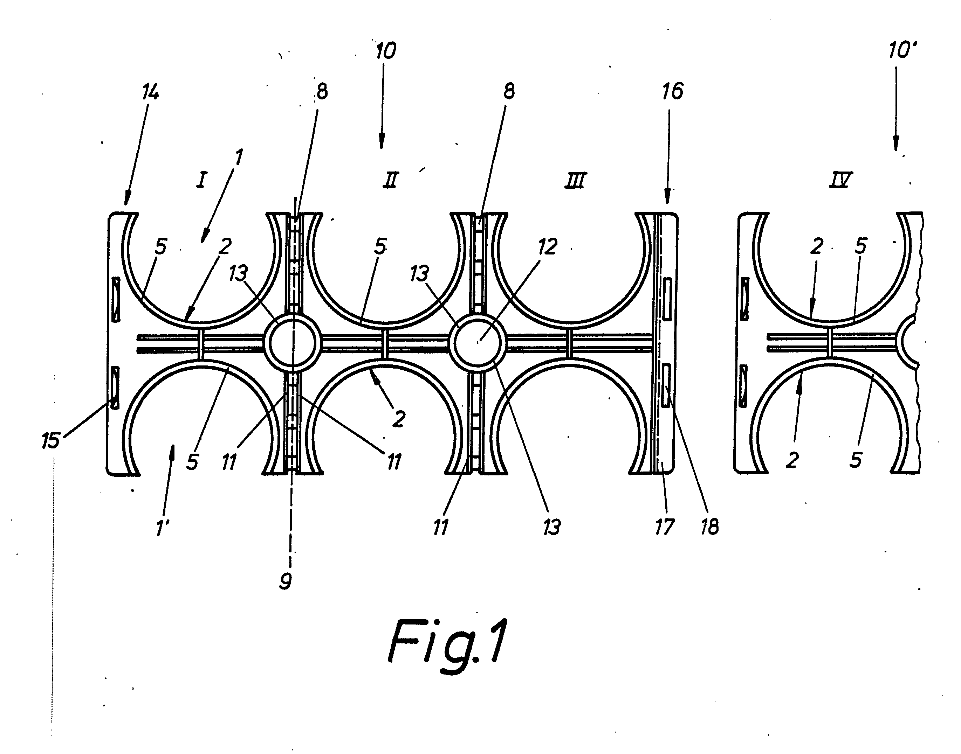

Ein Abstandshalter der eingangs genanten Art ist aus dem
DE-GM 76 17 565 bekannt. Ein derartiger Abstandshalter, der
nachfolgend unter Bezugnahme auf Figur 1 erläutert wird,
wird zur Aufnahme von Rohren aus Kunststoff o.dgl. verwendet, die in festem Abstand zueinander fixiert werden
sollen. Dieser Abstandshalter hat sich in der Praxis als

S/Rud

zweckmäßig erwiesen, wenn Rohre gleicher Größe, d.h. gleichen Durchmessers, in den Abstandshalter eingesetzt werden sollen. Der Abstandshalter ist symmetrisch zu seiner Längsachse aufgebaut und weist an seiner oberen Seite sowie an seiner unteren Seite jeweils die gleiche Zahl von Öffnungen auf. Nachteilig ist daher, daß bei Verwendung des Abstandshalters zur Aufnahme von Rohren nur in seiner oberen Reihe, oder zur Aufnahme von mehreren Rohren in seiner oberen Reihe von Öffnungen bei gleichzeitigem Einsatz eines einzigen Rohres in seiner unteren Reihe von Öffnungen, relativ viel Material unnütz verbraucht wird, da er nur unter Wegnahme symmetrischer Abschnitte verkleinerungsfähig ist.

Der Erfindung liegt die Aufgabe zugrunde, einen Abstandshalter zu schaffen, der für seinen Einsatz in vergrößertem Maße kombinierbar ist.

Diese Aufgabe wird dadurch gelöst, daß wenigstens zwei Halterungsteile und ein Verbindungselement zur Verbindung der Halterungsteile vorgesehen sind.

Weitere Ausgestaltungen der Erfindung ergeben sich aus den Unteransprüchen.

Durch die Trennung des bekannten Abstandshalters entlang seiner Längsmittellinie in zwei Halterungsteile und den Einsatz eines die beiden Halterungsteile aufnehmenden Verbindungselementes ist es möglich, den Abstandshalter aus zwei Halterungsteilen unterschiedlicher Form und/oder Stärke zu kombinieren.

Die beiden Halterungsteile können unterschiedliche Stärke haben
oder unterschiedliche Zahl von Öffnungen oder auch Öffnungen mit
unterschiedlichen Radien. Infolgedessen läßt sich ein Abstandshalter zu jeder beliebigen Kombination zusammensetzen, um beispielsweise Rohre unterschiedlichen Durchmessers zu fixieren, um
unterschiedliche Stabilitätsanforderungen zu erfüllen oder auch
eine unterschiedliche Zahl von Rohren an seiner Ober- und Unterseite aufzunehmen. Darüberhinaus läßt sich im Bedarfsfall auch
nur ein Halterungsteil des Abstandshalters zusammen mit einem Verbindungselement verwenden, welches nur ein Schenkelpaar aufweist
und mit Hilfe seines Fußabschnitts an einer Wand, Decke o.dgl.
befestigbar ist.

Im folgenden werden bevorzugte Ausführungsformen des erfindungsgemäßen Abstandshalters zur Erläuterung weiterer Merkmale anhand
der Zeichnung veranschaulicht. Es zeigen:

Fig. 1   eine Darstellung eines vollständigen, bekannten
         Abstandshalters sowie eines weiteren, teilweise
         dargestellten, bekannten Abstandshalters,

Fig. 2   eine schematische Darstellung eines erfindungsge-
         mäßen Abstandshalters,

Fig. 3   eine schematische Schnittansicht einer abgewandelten
         Ausführungsform des Verbindungselementes,

Fig. 4 eine gegenüber Fig. 3 abgewandelte Ausführungsform
         des Verbindungselementes,

Fig. 5 eine weitere Ausführungsform eines Verbindungselementes, das zwei symmetrische Schenkelpaare aufweist,
und

Fig. 6 eine Draufsicht auf eine Ausführungsform des
Verbindungselementes nach Fig. 5.

In Figur 1 sind in verkleinertem Maßstab Abstandshalter 10 und
10' dargestellt, wie sie aus dem DE-GM 76 17 565 bereits bekannt
sind. Jeder Abstandshalter weist teilkreisförmige Öffnungen 1
mit Aufnahmeflächen 2 auf, die durch Verstärkungsrippen 5 gebildet werden, welche im wesentlichen senkrecht zum Körper des
Abstandshalters und seitlich über ihn hinausstehen. Der Verlauf
der Verstärkungsrippen 5 umfaßt einen Teilkreis bzw. Bogen.
Jeder Abstandshalter 6 besteht aus mehreren Abschnitten, beispielsweise drei Abschnitte I, II und III, von denen jeder
Abschnitt zwei Öffnungen 1 und 1' festlegt. Die mechanische
Verbindung einander benachbarter Abschnitte I, II und III erfolgt mittels Verbindungsstegen 8, die zwischen dem Abschnitt I
und dem Abschnitt II eine gestrichelt angedeutete Sollbruchlinie 9
definieren. Die Verstärkungsrippen 5 für die Aufnahmeflächen 2
sind symmetrisch zur Längsmittellinie des Abstandshalters vorgesehen. Nach Fig. 1 wird jeder Abschnitt I, II und III durch wenigstens eine seitliche Versteifungsrippe 11 begrenzt; im mittleren
Abschnitt II sind zwei seitliche Versteifungsrippen 11 vorgesehen.
Im Bereich der Schwächungslinien 9 sind Aussparungen 12 angeordnet, die vorzugsweise durch eine ringförmige Versteifungsrippe
bzw. einen Versteifungskranz 13 begrenzt werden. Der Versteifungskranz 13 steht ebenso wie die Versteifungsrippen 11 und die Verstärkungsrippen 5 beidseitig vom Abstandshalter 6 ab. Zwischen den Versteifungsrippen 11 und dem Versteifungskranz 13 sind die Verbindungsstege 8 und nicht bezeichnete Aussaprungen vorgesehen,
welche die Sollbruchlinie 9 festlegen.

Am einen Ende 14 jedes Abstandshalters 1 sind keilförmige Vorsprünge ausgebildet, die beidseitig vom Grundkörper 6 abstehen.
Am gegenüberliegenden Ende jedes Abstandshalters,das bei dem
dargestellten Ausführungsbeispiel dem Abschnitt III zugeordnet
ist, ist eine Nut 17 vorgesehen, die mit Abstand zueinander
einhaltenden Schlitzen 18 versehen ist. Bei einer solchen Anordnung von Schlitzen 18 und Vorsprüngen 15 kann eine feste
Verbindung zwischen zwei Abstandshaltern 10 und 10' hergestellt
werden, da die beiden Abstandshalter fest miteinander gekuppelt
sind, wenn die Vorsprünge 15 in die zugeordneten Schlitze 18 der
Nut 17 einrasten. Die Vorsprünge 15 und die Nut 17 mit Schlitzen
18 ergeben eine Feder-Nut-Verbindung, die aufgrund der Tatsache,
daß die Abstandshalter aus Kunststoff hergestellt sind, bei entsprechender Kraftanlegung wieder lösbar ist.

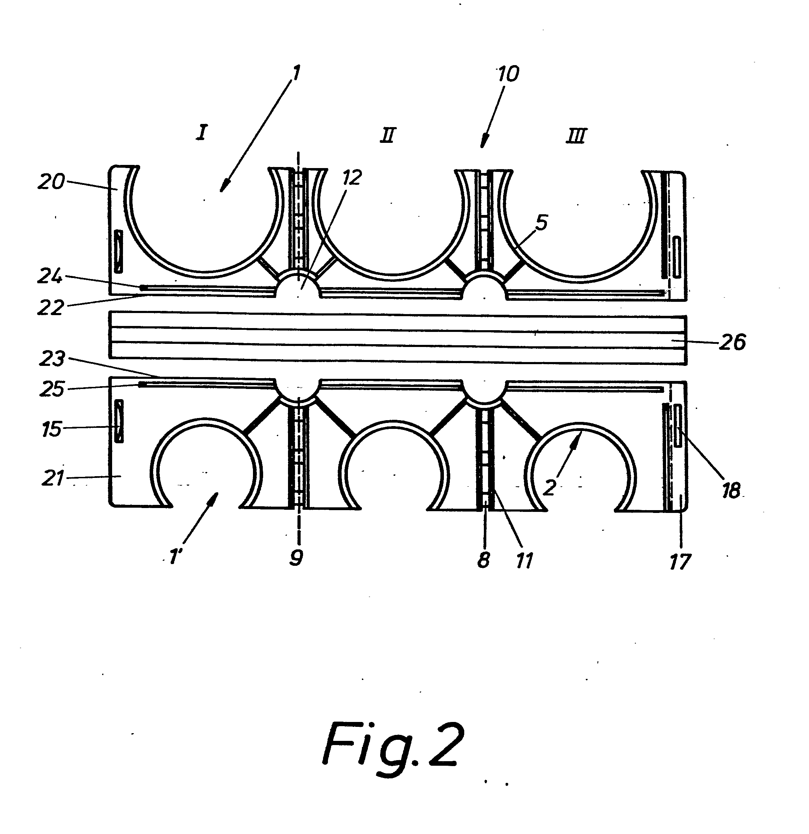

Unter Bezugnahme auf die Figuren 2 bis 6 werden im folgenden bevorzugte Ausführungsformen des erfindungsgemäßen Abstandshalters
beschrieben. Gleiche Teile gegenüber dem Abstandshalter nach
Fig. 1 sind im folgenden mit gleichen Bezugszeichen angegeben.

Der Abstandshalter 10 besteht nach Fig. 2 aus einem Halterungsteil 20 und 21. Jedes Halterungsteil 20, 21 ist an seiner einen Seite
mit den Öffnungen 1 und 1'versehen.Die Halterungsteile 20 und
21 ergeben sich im wesentlichen aus dem Abstandshalter nach Fig. 1
dadurch, daß er entlang der Mittellinie geschnitten ist und jedes
Halterungsteil 20, 21 an einer zur Reihe mit den Öffnungen 1
bzw. 1' gegenüberliegenden Kante 22 bzw. 23 endet. Entlang jeder

Seitenkante 22 bzw. 23 weist jedes Halterungsteil eine Rippe 24 bzw. 25 auf, die über die gesamte Länge des Halterungsteiles durchgehend verläuft oder entsprechend Fig. 2 durch halbkreisförmige Öffnungen 12 mehrfach unterbrochen ist und damit im wesentlichen nur entlang der Abschnitte I, II und III ausgebildet ist. Die Rippen 24, 25 haben neben ihrer Versteifungsfunktion die Aufgabe von Führungsschienen, die in ein noch zu erläuterndes Verbindungselement 26 eingeschoben werden. Der Grundaufbau des Halterungsteiles 20 bzw. 21 entspricht dem bekannten Abstandshalter nach Fig. 1, so daß die Öffnungen 1 durch über einen Teilkreis verlaufende, im wesentlichen senkrecht zum Körper jedes Halterungsteiles stehende Verstärkungsrippen 5 gebildet werden, die eine größere Breite gegenüber der Stärke des Halterungskörpers 20 bzw. 21 haben und als Auflagefläche für die einzusetzenden Rohre dienen. Nach Fig. 2 kann das Verbindungselement 26 zwei Halterungsteile 20, 21 aufnehmen, von denen das Halterungsteil 20 Öffnungen 1 mit einem ersten Radius enthält, während das Halterungsteile 21 Öffnungen 1' mit einem zweiten, gegenüber dem ersten Radius unterschiedlichen Radius aufweist. Damit können beispielsweise zwei Halterungsteile mit Öffnungen unterschiedlichem Radius kombiniert werden. Nach einer weiteren Abwandlung der Erfindung können mit dem Verbindungselement 26 zwei Halterungsteile 20, 21 kombiniert werden, von denen das eine Halterungsteil 20 eine erste Zahl von Öffnungen 1 aufweist, während das Halterungsteil 21 eine zweite Zahl von Öffnungen 1' aufweist, wobei die Zahl der Öffnungen des ersten und zweiten Halterungsteiles gleich groß oder verschieden sein kann.

Entgegen der Darstellung nach Figur 2 können die beiden Halterungsteile 20, 21 auch noch unterschiedliche Länge haben.

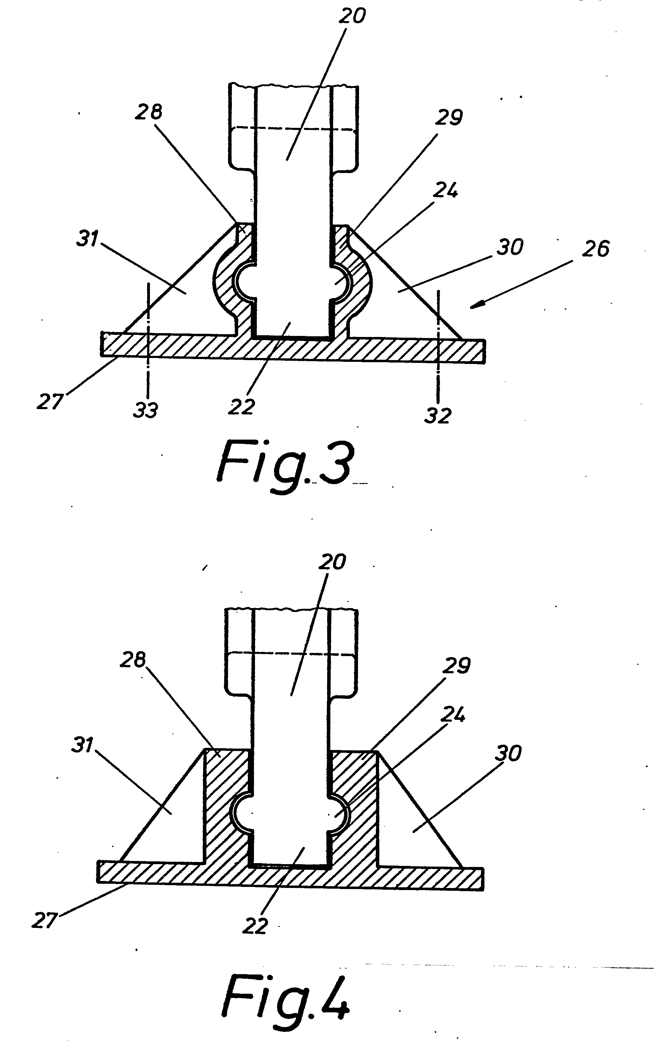

Fig. 3 zeigt eine Schnittdarstellung eines Abstandshalters, dessen Verbindungselement 26 mit einem Fußabschnitt 27 versehen ist, der im wesentlichen eben bzw. gerade ausgebildet ist und ein Schenkelpaar trägt, d.h. Schenkel 28 und 29, welche vom Fußabschnitt 27 gemäß Fig. 3 nach oben abstehen. Das Halterungsteil 20 ist in Fig. 3 nur in Teilschnittansicht gezeigt und weist entsprechend vorstehender Erläuterung Führungsrippen 24 auf, die beidseitig entlang der Seitenkante 22 des Halterungsteiles 20 ausgebildet sind. Die Führungsrippen 24 stehen etwa senkrecht vom Körper des Halterungsteiles 20 ab. Die beiden Schenkel 28 und 29 haben an ihrer auf das Halterungsteil zugewandten Fläche eine solche Profilierung, daß sie die Führungsrippen 24 führend aufnehmen. Die Schenkel 28, 29 können - wie in Fig. 3 dargestellt - bogenförmig ausgebildet sein, wobei der bogenförmige Abschnitt der Form der Außenfläche jedes Halterungsteiles im Bereich seiner die Rippen 24, 25 enthaltenden Seite 22 bzw. 23 entspricht. Zur Versteifung der Schenkel 28, 29 können bereichsweise senkrecht zum Fußabschnitt 27 angeordnete zusätzliche Versteifungsrippen 30, 31 vorgesehen werden. Das Verbindungselement 27, an dem die Schenkel 28, 29 und gegebenenfalls die Versteifungsrippen 30, 31 als integrale Elemente ausgebilder sind, wird vorzugsweise aus Kunststoff gefertigt.

Mit dem in Fig. 3 dargestellten Verbindungselement wird der Einsatz eines einzigen Halterungsteiles 20 oder 21 und seine Befestigung an Wänden, Decken o.dgl. ermöglicht. Zu diesem Zweck werden die Verbindungselemente 27 durch Schrauben (durch eine Linie 32, 33 in Fig. 3 angedeutet) an der betreffenden Fläche befestigt, was dadurch möglich ist, daß an dem Fußabschnitt 27 nur die beiden in einer Richtung abstehenden Schenkel 28, 29 angeformt sind. Die Schenkel 28, 29 können auch die in Fig. 4 gezeigte Form haben, d.h. aus im wesentlichen rechteckigen Elementen bestehen, in welchen zur Aufnahme der Rippen 24 entsprechénde, beispielsweise U-förmige Aussparungen 34 ausgebildet sind.

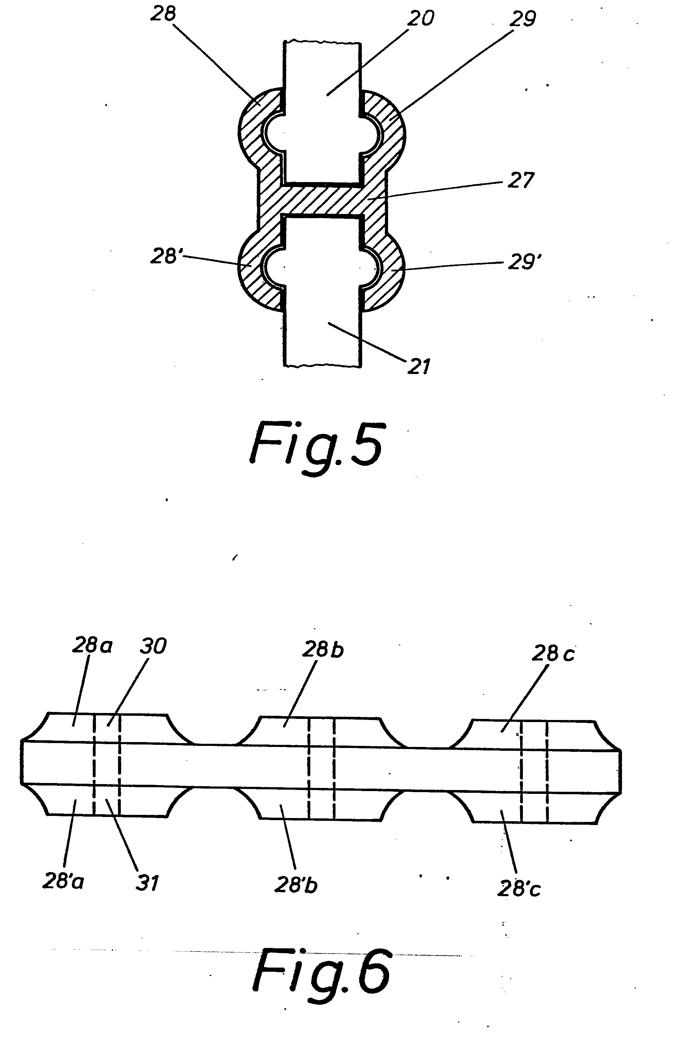

Fig. 5 zeigt eine weitere Abwandlung des erfindungsgemäßen Abstandshalters, insbesondere des Verbindungselementes 27, welches im Gegensatz zu den Ausführungsformen nach Fig. 3 und 4 spiegelsymmetrische Konstruktion hat. Das Verbindungselement 27 nach Fig. 5 ergibt sich aus einer Verdoppelung bzw. spiegelsymmetrischen Ausbildung des Verbindungselements 27 der in Fig. 3 oder 4 dargestellten Art und vermag zwei Halterungsteile 20, 21 aufzunehmen. Wie vorstehend beschrieben ist, läßt sich mit diesem Verbindungselement 27 ein Abstandshalter erhalten, der beispielsweise aus zwei Halterungsteilen 20 und 21 besteht, die entweder unterschiedliche Zahl von Öffnungen 1 bzw. 1' und/oder Öffnungen mit unterschiedlichen Radien aufweisen. Durch geringfügige Abwandlung des Verbindungselementes 27 nach Fig. 5 lassen sich auch zwei Halterungsteile 20, 21 miteinander kuppeln, die unterschiedliche Materialstärke haben. Wenn beispielsweise das untere Halterungsteil 21 geringere Materialstärke hat als das obere Halterungsteil 20, sind die unteren Schenkel 28', 29' in kleinerem Abstand zueinander vorzusehen als die oberen Schenkel 28,29.

Das Verbindungselement 27 zur Kombination zweier unterschiedlicher Halterungsteile 20, 21 weist gemäß einer bevorzugten Ausführungsform der Erfindung zwei Schenkelpaare entsprechend Fig. 5 auf, die vorzugsweise über die gesamte Länge der Halterungsteile 20, 21 verlaufen. Nach einer weiteren Abwandlung ist es möglich, das Verbindungselement 27 kleiner oder größer gegenüber den betreffenden Halterungsteilen vorzusehen, so daß ein Verbindungselement 27 mehr als ein Halterungsteil zumindest teilweise aufnehmen kann.

Nach einer weiteren Abwandlung können die Schenkel 28, 29 bzw. 28',
29' entsprechend Fig. 6 nur bereichsweise ausgebildet sein, was
aus Gründen der Materialersparnis vorteilhaft ist. Fig. 6 zeigt,
daß ein Verbindungselement 27 beispielsweise drei Paare von symmetrischen Aufnahmeschenkeln, von welchen die Schenkel 28a, b, c
und 28'a, b, c gezeigt sind, aufweist. Die Zahl der Schenkelpaare
kann beliebig vergrößert oder reduziert werden.

Bei Verwendung des in Fig. 5 gezeigten Verbindungselementes 27
werden die zugehörigen bzw. zu verwendenden Halterungsteile 20, 21
durch Einschieben mit ihren Führungsrippen 24 in die entsprechend
geformten Aussparungen 34 des Verbindungselementes 27 fest miteinander gekuppelt, so daß eine feste Anordnung der beiden Halterungsteile 20, 21 in dem Verbindungselement 27 sichergestellt ist.
Zur Erhöhung der Stabilität des Verbindungselementes 27 bei der
Ausführungsform, wie sie unter Bezugnahme auf Fig. 5 erläutert
wurde, können entsprechend der Beschreibung zu Fig. 3 und 4
beidseitig Versteifungsrippen 30, 31 vorgesehen werden, die ein
Aufbiegen der Schenkel 28, 29 verhindern.

Im Gegensatz zu dem Abstandshalter nach Fig. 1 sind bei dem
erfindungsgemäßen Abstandshalter bzw. bei seinen Halterungsteilen die Führungsschienen ohne Begrenzung, beispielsweise
durch den Kranz 13, zu konzipieren, wie es in Fig. 2 gezeigt ist,
damit jedes Halterungsteil mit seinen Rippen 24 bzw. 25 in das
Verbindungselement hineingeschoben werden kann. Gegebenenfalls
kann die teilkreisförmige Öffnung 12 entfallen, um die Rippen
24 und 25 in über die gesamte Länge des zugehörigen Halterungsteiles verlaufender Anordnung vorsehen zu können.

Nach einer weiteren Abwandlung der Erfindung können an den Stirnflächen der Schenkel Rastvorsprünge und, diesen gegenüberliegend, im betreffenden Halterungsteil Rastnuten vorgesehen werden, oder umgekehrt, wodurch nach dem Ineinanderschieben von Verbindungselement und Halterungsteil ein Einrasten in vorbestimmter Position erzielt wird.

Firma Arthur Böhm, Kunststoffverarbeitung,
Schwarzenbach/Saale

## Patentansprüche

1. Abstandshalter zur Aufnahme von Rohren oder dergleichen,
   bestehend aus mehreren Abschnitten mit einem Teilkreis entsprechenden Öffnungen zur Lagerung der Rohre, wobei gegebenenfalls benachbarte Abschnitte entlang einer Sollbruchlinie
   voneinander trennfähig sind und gegebenenfalls seitliche
   Feder- und Nutelemente zur Befestigung eines weiteren Abstandshalters aufweisen, und mit Versteifungsrippen zwischen
   den Öffnungen,
   g e k e n n z e i c h n e t   d u r c h
   wenigstens zwei Halterungsteile (20, 21) und ein Verbindungselement (27), wobei die Halterungsteile (20, 21) entlang ihrer einen Seitenkante mit den Öffnungen und entlang der anderen Seitenkante (22, 23) mit Rastrippen (24, 25) zum Ein-

S/Rud

griff in durch Schenkel (28,29,28',29') definierte Aussparungen im Verbindungselement (27) ausgebildet sind.

2. Abstandshalter nach Anspruch 1, dadurch gekennzeichnet, daß die Schenkel (28, 29, 28', 29') des Verbindungselementes (27) im wesentlichen symmetrisch und in zueinander entgegengesetzten Richtungen von einem Fußabschnitt (27a) abstehend vorgesehen sind.

3. Abstandshalter nach Anspruch 1 oder 2, dadurch gekennzeichnet, daß die Öffnungen im einen Halterungsteil (20 bzw. 21) unterschiedlichen Durchmesser gegenüber den Öffnungen des anderen Halterungsteiles (21 bzw. 20) aufweisen.

4. Abstandshalter nach einem der Ansprüche 1 bis 3, dadurch gekennzeichnet, daß in den Schenkeln (28, 29, 28', 29') des Verbindungselementes (27) an ihrer dem Halterungsteil (20, 21) zugewandten Seite Führungsnuten (34) vorgesehen sind.

5. Abstandshalter nach einem der vorangehenden Ansprüche, dadurch gekennzeichnet, daß die Schenkel (28, 29, 28', 29') über die Länge des Verbindungselementes (27) ununterbrochen verlaufend vorgesehen oder unterbrochen sind.

6. Abstandshalter nach einem der vorangehenden Ansprüche, dadurch gekennzeichnet, daß jedes Schenkelpaar (28, 29, 28', 29') eine Profilierung aufweist, die der Seitenkante (22, 23) mit den Rastrippen (24, 25) entspricht.

7. Abstandshalter nach einem der vorangehenden Ansprüche, dadurch gekennzeichnet, daß die Stärke der Halterungsteile (20, 21) unterschiedlich ist.

8. Abstandshalter nach einem der vorangehenden Ansprüche, dadurch gekennzeichnet, daß die Zahl der Öffnungen (1, 1') der Halterungsteile (20, 21) unterschiedlich ist.

9. Abstandshalter nach wenigstens einem der vorangehenden Ansprüche, dadurch gekennzeichnet, daß die Rastrippen (24 ) im wesentlichen symmetrisch zur Ebene des Halterungsteiles (20, 21) ausgebildet sind.

10. Abstandshalter nach einem der vorangehenden Ansprüche, dadurch gekennzeichnet, daß die Rastrippen (24) unterbrochen sind.

11. Abstandshalter nach einem der vorangehenden Ansprüche, dadurch gekennzeichnet, daß anstelle von Rastrippen (24) Rastvorsprünge vorgesehen sind.

**Fig.1**

Fig.2

0039467

**Fig.3**

**Fig.4**

0039467

Fig.5

Fig.6